# EUROPEAN PATENT APPLICATION

(11) **EP 4 811 282 A1**
(43) Date of publication of application: **23.09.2026**
(21) Application number: 25164300.3
(22) Date of filing: 18.03.2025
(51) Int. Cl.: G06T 7/10

(54) **CONVOLUTION-RECURRENT NEURAL NETWORK FRAMEWORK FOR AUTOMATED SEGMENTATION AND DECOMPOSITION OF NIDUS VASCULATURE**

(71) Applicant: Siemens Healthineers AG, 91301 Forchheim (DE)
(72) Inventor: Menon, Deepak K, 560100 Bangalore (IN); Mabiyan, Rashmitha R, 560100 Bangalore (IN)
(74) Representative: HKW Intellectual Property PartG mbB

(57) **Abstract**

The invention relates to a computer-implemented method for training an artificial intelligence model for segmenting blood vessels in an angiography image comprising preprocessing a training data set, the training data set comprising angiography images depicting an arterial phase and/or a venous phase of the blood vessels, to decrease a noise level and/or to enhance a contrast in the angiography images, providing the angiography images depicting an arterial phase to a first artificial intelligence model, providing the angiography images depicting a venous phase to a second artificial intelligence model, training the first artificial intelligence model for segmenting arteries in the angiography images, training the second artificial intelligence model for segmenting veins in the angiography images.

## Description

The present invention relates to a method for training an artificial intelligence model for segmenting blood vessels in an angiography image, a trained artificial intelligence model for segmenting blood vessels in an angiography image, a computer-implemented method for segmenting blood vessels in an angiography image, a computer program product and a system for segmenting blood vessels in an angiography image.

Medical imaging has provided a powerful tool for diagnosing abnormalities in a body of a patient for many years and has developed to represent a standard procedure in state-of-the-art medical diagnostics. Medical imaging made it possible to support a non-invasive diagnosis based on images that were captured of certain parts of a body of a patient. Said images were, e.g., captured by means of X-ray imaging, computed tomography (CT) imaging, positron emission tomography (PET) imaging, ultrasonic imaging, etc.

The imaging quality of these imaging methods has drastically improved over the last decades supporting the accurate identification of ever decreasing abnormalities. The imaging quality has further improved such that it allows a precise capturing of, e.g., X-rays which have penetrated the body of the patient with an improved contrast ratio (as compared to respective devices used decades ago) and suppressed blurring effects. These improvements of the imaging quality have advantageously contributed to a general improvement of medical imaging and has led to an increase in the constant demand for medical imaging even further.

However, even nowadays, the captured images (such as, e.g., angiography images) are, to a wide extent, still analyzed manually by an experienced physician. This is time and resource intensive and leads to rather high costs of medical imaging which, in turn, need to be compensated by already weakened healthcare systems and are accompanied by prolonged waiting times for the patients requiring a medical imaging-based diagnosis. Also, a manual mode of segmenting arteries and veins does not represent a standard way of analyzing the blood vessels which effectively leads to the need for the aforementioned experienced physicians.

The detection of small anomalies in the body of a patient plays in particular a dominant role when small blood vessels need to be investigated. These small-scale structures can oftentimes not be reliably identified based on currently existing (mostly manual) methods of reviewing medical images. However, even though some blood vessels may be small, they may nevertheless be subject to severe and threatening diseases or may even be their origin.

This may be of relevance when arteriovenous malformations (AVMs) are formed by a group of blood vessels. In such malformations, arteries and veins may unusually be tangled and may form direct connections, bypassing normal blood vessels. Such a formation may be referred to as the *nidus* of an AVM. The identification of a nidus may be seen as crucial to prevent a deterioration of a health state of a patient which may arise from the presence of the nidus.

What is more, even if a nidus is detected, a decision to be made by a physician is whether to treat the underlying AVM or not. However, up to today, a demarcation of arteries and veins in respective angiography images is mainly done manually by clinicians. This may require reviewing a plurality of angiography images, identifying arteries and veins manually and decide based thereon, whether a nidus is present or not.

Therefore, there is still a need to improve the analysis of medical images, in particular, when it comes to the analysis of small-scale structures, such as, e.g., blood vessels (and more specifically of arteries and veins), which is currently not yet fulfilled in a satisfying manner based on the presently known and applied procedures.

Therefore, it is an object of the present invention to further improve the segmentation of arteries and veins in an angiography image.

According to a first aspect, a computer-implemented method for training an artificial intelligence model for segmenting blood vessels in an angiography image is suggested. The computer-implemented method may comprise preprocessing a training data set, the training data set comprising angiography images depicting an arterial phase and/or a venous phase of the blood vessels, to decrease a noise level and/or to enhance a contrast in the angiography images and providing the angiography images depicting an arterial phase to a first artificial intelligence model as well as providing the angiography images depicting a venous phase to a second artificial intelligence model. Moreover, the computer-implemented method may comprise training the first artificial intelligence model for segmenting arteries in the angiography images and it may comprise training the second artificial intelligence model for segmenting veins in the angiography images.

The preprocessing may be configured to enhance a visibility of vascular structures by improving the contrast and by reducing the noise in the respective angiography image.

The first artificial intelligence model may be configured to act as an artery segmentor. In some examples, only angiography images that depict an arterial phase may be provided to the first artificial intelligence model.

The second artificial intelligence model may be configured to act as a veins segmentor. In some examples, only angiography images that depict a venous phase may be provided to the second artificial intelligence model.

An arterial phase of an angiography image may be referred to as a state at which the angiography image is captured that depicts bloods vessels at a state at which blood mainly flows through arteries.

A venous phase of an angiography image may be referred to as a state at which the angiography image is captured that depicts bloods vessels at a state at which blood mainly flows through veins.

By passing angiography images that depict an arterial phase and a venous phase to a respective first artificial intelligence model and a respective second artificial intelligence model, the accuracy of segmenting arteries and veins in the angiography images may be improved. This may be due to the fact that an artificial intelligence model may specifically be trained for the task of segmenting arteries (i.e., the first artificial intelligence model) and that an artificial intelligence model (i.e., the second artificial intelligence model) may specifically be trained for the task of segmenting veins. Training the first artificial intelligence model and the second artificial intelligence model separately from each other may allow specifically tailoring each of the first artificial intelligence model and of the second artificial intelligence model to their respective intended use. In use, the respective output of the first artificial intelligence model and of the second artificial intelligence model may synergistically be combined to allow a versatile segmentation of blood vessels in an angiography image. Consequently, the diagnosis and identification of an AVM in angiography images may advantageously be supported such as the decision-making of a physician, whether to treat an AVM or not.

In case an angiography image of the plurality of angiography images depicts both an artery phase and a venous phase, the respective angiography image may be provided to both the first artificial intelligence model and to the second artificial intelligence model.

Based thereon, an improved training of an artificial intelligence model may be provided which artificial intelligence model, when trained, may be capable of more accurately segmenting arteries and veins in an angiography image.

According to an embodiment, the training of the first artificial intelligence model and the training of the second artificial intelligence model may comprise a few shot learning, FSL, procedure.

FSL may be referred to as a technique in which an artificial intelligence model (e.g., the first artificial intelligence model and/or the second artificial intelligence model) may learn to make accurate predictions by training on a small training data set only, in particular in those situations in which only a limited amount of annotated (training) data is available.

During the training step of the first artificial intelligence model and/or of the second artificial intelligence model, the respective first artificial intelligence model or the second artificial intelligence model may learn to generate prototypes from features that are essential for the segmentation procedure and based on the few-shot examples.

As a result, an efficient training of the first artificial intelligence model and of the second artificial intelligence model may be facilitated with a limited training data set only.

According to a further embodiment, the first artificial intelligence model may comprise a first convolutional neural network in a first U-net architecture and the second artificial intelligence model may comprise a second convolutional neural network in a second U-net architecture.

A U-Net architecture may be referred to as a convolutional neural network designed for image segmentation tasks (e.g., the segmentation of arteries and veins). It is characterized by its U-shaped structure, which may comprise two main components: a contracting path (encoder) and an expansive path (decoder).

Providing convolutional neural networks in respective U-net architectures may allow a training of a respective artificial intelligence model such that it may efficiently learn to segment angiography images based on limited training data sets while nevertheless achieving high segmentation accuracy.

According to a further embodiment, the first U-net architecture of the first artificial intelligence model may comprise a first long short-term memory (LSTM) and/or the second U-net architecture of the second artificial intelligence model may comprise a second LSTM.

In some examples, the LSTM may be referred to as a specific type of a recurrent neural network (RNN).

Using an LSTM may further improve the training procedure in such cases in which a blood vessel may be partially occluded or may at least partially overlap with another blood vessel in an angiography image. The respective RNN may leverage information from previous or subsequent frames to correctly segment a blood vessel. When blood vessels overlap in one angiography image but are distinct in others, the LSTM may track the temporal evolution of each vessel helping to disentangle them in the segmentation process. This may reduce the likelihood of errors that might occur if each angiography image was segmented independently from each other.

According to a further embodiment, the computer-implemented method may further comprise rotating at least one of the angiography images at least n times, with n ≥ 1, about at least one respective angle prior to providing the at least one rotated angiography image to the first artificial intelligence model or to the second artificial intelligence model, respectively. Moreover, the computer-implemented method may comprise ensembling an output of the first artificial intelligence model to obtain at least a first ensembled output and/or ensembling an output of the second artificial intelligence model to obtain a second ensembled output. Moreover, the computer-implemented method may comprise superimposing the at least one first ensembled output and/or the at least one second ensembled output to obtain a single segmentation output.

In some examples, an output mask from the arterial and veins segmentor (i.e., at least the first artificial intelligence model and/or at least the second artificial intelligence model, respectively) may overlap in the nidus region due to its complexity. If such complex blood vessel structures are present, a given angiography image may be rotated n times, with n ≥ 1, in random directions. Each of the rotated images may subsequently be passed to the first artificial intelligence model and/or the second artificial intelligence model (e.g., each comprising a respective U-net architecture), as set out herein. An ensembled output of each of the individual segmentors (e.g., of each respective artificial intelligence model) may be superimposed together to yield a (final) segmentation.

In some examples, the individual outputs of the segmentors may be ensembled together to a (final) segmentor by means of a respectively trained neural network.

In some examples, more than one first artificial intelligence model may be provided that is trained to segment arteries. Additionally or alternatively, more than one second artificial intelligence model may be provided that is trained to segment veins.

Rotating the angiography images, providing them to a respective artificial intelligence model and ensembling the output of the respective artificial intelligence model may be performed (separately) for both the artery segmentor as well as for the veins segmentor.

By rotating the angiography images, a different view of the angiography images and the blood vessels depicted therein, may be given to each of the first artificial intelligence model and of the second artificial intelligence model whereas the ensembling may support the generation of an optimized segmentation which may be achieved by combining the individual outputs of each of the first artificial intelligence model and of the second artificial intelligence model.

According to a further embodiment, the angiography images may be captured at different points in time, preferably such that they may depict a temporal progression of a contrast agent through the blood vessels depicted in the angiography images.

In some examples, a contrast agent may be injected into a vascular system of a patient, i.e., into the blood vessels of the patient to increase a contrast between the blood vessels and surrounding tissue on the respective angiography images.

In some cases, LSTMs may be designed to capture a temporal behavior in the angiography images. Based on the usage of LSTMs, a segmentation of blood vessels may further be improved, in particular in those cases, in which blood vessels may be overlapped and may thus be difficult to distinguishing in a single frame (i.e., a single angiography image) only. The inclusion of LSTMs, in cases in which the angiography images are captured at different points in time, may help in learning temporal patterns as the vessels may overlap or change appearance across different angiography images.

According to a second aspect, a trained artificial intelligence model for segmenting blood vessels in an angiography image is suggested. The trained artificial intelligence model may be trained according to the computer-implemented method as described above.

The trained artificial intelligence model may comprise a first trained artificial intelligence model (e.g., trained for segmenting arteries) and it may comprise a second trained artificial intelligence model (e.g. trained for segmenting veins).

The trained artificial intelligence model may efficiently support the automated demarcation of arteries and/or veins in an angiography image and may thus support a subsequent diagnosis.

According to a third aspect, a computer-implemented method for segmenting blood vessels in an angiography image is suggested. The computer-implemented method may comprise preprocessing the angiography image depicting an arterial phase and/or a venous phase of the blood vessels, to decrease a noise level and/or to enhance a contrast in the angiography image. Moreover, the computer-implemented method may comprise providing the angiography image to a trained artificial intelligence model that is trained according to the computer-implemented method as set out herein. Moreover, the computer-implemented method may comprise segmenting arteries and/or veins in the angiography image based on the trained artificial intelligence model.

In some examples, the trained artificial intelligence model may comprise a trained first artificial intelligence model that has been trained to segment arteries in the angiography image. Moreover, the trained artificial intelligence model may additionally comprise a trained second artificial intelligence model that has been trained to segment veins in the angiography image.

In some examples, an output of the first artificial intelligence model may be combined with an output of the second artificial intelligence model to provide a segmented angiography image in which arteries and/or veins have been segmented.

In some examples, the providing of the angiography image to the trained artificial intelligence model may comprise providing the angiography image to the first trained artificial intelligence model if the angiography image depicts an arterial phase. The providing of the angiography image to the trained artificial intelligence model may further comprise providing the angiography image to the second trained artificial intelligence model if the angiography image depicts a venous phase.

The segmenting of the arteries and/or veins may comprise segmenting arteries in the angiography image by the trained first artificial intelligence model and/or segmenting veins in the angiography image by the trained second artificial intelligence model.

This may support an improved and more accurate segmenting of blood vessels in an angiography image and may thus also contribute to a fast and accurate determination whether an anomaly with respect to the blood vessels depicted in the angiography image is present. Based thereon, a decision, whether a respective patient needs further treatment, may efficiently be supported.

According to an embodiment, the computer-implemented method may further comprise outputting the angiography image with the segmented arteries and/or veins on an output device. The computer-implemented method may preferably comprise highlighting the segmented arteries and/or veins in the angiography image. The highlighting may preferably be done by color coding the segmented arteries and/or veins.

In some examples, the output device may be a (touch-sensitive) screen. In some examples, the output device may be a laptop computer, a tablet, a smartphone or any other suitable device. In some examples, the highlighting may comprise contouring (e.g., drawing a contour line about) the segmented arteries and/or veins in the angiography image.

The color coding may comprise highlighting the segmented arteries (e.g., in red) with a different color as compared to the segmented veins (e.g., in blue).

By outputting the angiography image with the segmented arteries and/or veins, a basis for planning a surgery (and for eliciting whether a surgery is possible or is recommended) may be facilitated. In particular, a fine segmenting of complex blood vessel structures, depicted in an angiography image, may be supported.

According to a further embodiment, the computer-implemented method may comprise determining, based on the segmented arteries and/or veins, that an arteriovenous malformation is present in the angiography image, preferably in a nidus region.

In the context of arteriovenous malformations (AVMs), a nidus may be referred to as the central core or focal point of the vascular anomaly where abnormal connections between arteries and veins occur. It may be characterized by a complex network of tangled blood vessels that may lack the normal intervening capillary bed. The nidus may serve as the site of direct arteriovenous shunting, allowing blood to flow at high velocities and pressures without the usual resistance provided by capillaries.

In some examples, the determining that an AVM is present, may be based on calculating a likelihood that is indicative for the presence of an AVM in the angiography image. The likelihood may indicate a percentage (e.g., between 0 and 100) wherein a high percentage value may indicate that the presence of an AVM is likely whereas a low percentage value may indicate that the presence of an AVM is unlikely.

In some examples, the determining that an arteriovenous malformation is present, may be used to determine whether the arteriovenous malformation is curable, e.g., by surgery. In some examples, the determining that an arteriovenous malformation is present may be used for subsequent treatment planning, e.g., for planning a surgery. This may support an automated determining whether an AVM is present in an angiography image. This may decrease the time effort that is required for determining whether an AVM is present or not. Therefore, a diagnosis may efficiently be supported and additionally, the reliability of a respective diagnosis may be improved.

According to a further embodiment, the preprocessing may comprise executing a contrast limited advanced histogram equalization, CLAHE.

In some examples, applying CLAHE may comprise dividing the respective angiography image into smaller regions and subsequently applying a histogram equalization to these smaller regions.

In some examples, the preprocessing may comprise a high-pass filtering of the respective angiography image. A respective high-pass filter may be designed to allow high-frequency components to pass through while reducing or eliminating low-frequency components. This high-pass filtering may enhance the edges of blood vessels and may let them appear more distinct.

The preprocessing may effectively enhance the visibility of vascular structures in the arterial phase and in the venous phase due to their flow characteristics. As a result, the accuracy in segmenting arteries and veins may efficiently be supported.

According to a further embodiment, the angiography image may be a digital subtraction angiography, DSA, image.

A DSA image may be referred to as a radiographic image produced using digital subtraction angiography, a medical imaging technique designed to visualize blood vessels with high contrast. The method involves capturing a baseline (pre-contrast) image, followed by an image acquired after the injection of a contrast agent into the vascular system. Through digital post-processing, the baseline image may be subtracted from the contrast-enhanced image, effectively removing background structures such as bones and soft tissues. This may enhance the visibility of blood vessels, enabling precise assessment of vascular conditions, stenoses, aneurysms, or other abnormalities.

By providing the angiography image as a DSA image, flow information, representing a blood flow through the blood vessels to be segmented, may be provided to the segmentation algorithms thereby improving the overall segmentation accuracy as well as a subsequent diagnosis.

According to a further embodiment, the angiography image may be retrieved from a remote entity, preferably a database.

In some examples, the angiography image may be retrieved over a local area network. In some examples, the angiography image may be retrieved over the internet.

In some examples, the angiography image may be retrieved from an angiography imaging device.

By retrieving the angiography image from a remote entity, historic angiography images may be used for training the first artificial intelligence model and the second artificial intelligence model. As a result, the training data set may be increased and the accuracy of the trained first artificial intelligence model and of the trained second artificial intelligence model may be improved.

In case the angiography image is used for a segmentation procedure, the entity performing the segmentation procedure may be logically separated from the data storage. Therefore, the entity performing the segmentation procedure may not necessarily be provided with dedicated means for storing (large) amounts of data. Thus, the costs for deploying the entity used for performing the segmentation procedure may be decreased.

According to a fourth aspect, a computer program product is suggested. The computer program product may comprise instructions which, when the program is executed by a computer, cause the computer to carry out the computer-implemented method as set out herein.

A computer program means, may be embodied as a memory card, USB stick, CD-ROM, DVD or as a file which may be downloaded from a server in a network. For example, such a file may be provided by transferring the file comprising the computer program product from a wireless communication network.

One or more algorithms/computer programs described herein may be embodied directly in hardware, in a software module executed by a processor, or in a combination of the two. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD-ROM, or any other form of storage medium known in the art. An exemplary storage medium is coupled to the processor so the processor may read information from, and writes information to, the storage medium. In the alternative, the storage medium may be integral to the processor. The processor and the storage medium may reside in an application-specific integrated circuit (ASIC). In the alternative, the processor and the storage medium may reside as discrete components in any component of a mobile computing platform.

According to a fifth aspect, a computer-implemented apparatus for segmenting blood vessels in an angiography image is suggested. The computer-implemented apparatus may comprise a preprocessing unit for preprocessing the angiography image depicting an arterial phase or a venous phase of the blood vessels, to decrease a noise level and/or to enhance a contrast in the angiography image and a providing unit for providing the angiography image to a trained artificial intelligence model that is trained according to the computer-implemented method as set out herein. The computer-implemented apparatus may further comprise a segmenting unit for segmenting arteries and/or veins in the angiography image based on the trained artificial intelligence model.

According to a sixth aspect, a computer-implemented apparatus for training an artificial intelligence model for segmenting blood vessels in an angiography image is suggested. The computer-implemented apparatus may comprise a preprocessing unit for preprocessing a training data set, the training data set comprising angiography images depicting an arterial phase or a venous phase of the blood vessels, to decrease a noise level and/or to enhance a contrast in the angiography images. Moreover, the computer-implemented apparatus may comprise a providing unit for providing the angiography images depicting an arterial phase to a first artificial intelligence model as well as a providing unit for providing the angiography images depicting a venous phase to a second artificial intelligence model. Moreover, the computer-implemented apparatus may comprise a training unit for training the first artificial intelligence model for segmenting arteries in the angiography images and it may comprise a training unit for training the second artificial intelligence model for segmenting veins in the angiography images.

According to a seventh aspect, a system for segmenting blood vessels in an angiography image is suggested. The system may comprise means for executing the computer-implemented method as disclosed herein as well as means for executing the computer program product as disclosed herein.

Some embodiments are described in isolation from each other to facilitate an easy understanding of the invention. However, this does not exclude a combination of the embodiments set out herein. It is further emphasized that embodiments of the first aspect may, e.g., be combined with aspects of the second, third, fourth, fifth, sixth or the seventh aspect. Also, other permutations of the aspects disclosed herein may be possible.

The embodiments and features described with reference to the apparatus of the present invention apply, mutatis mutandis, to the method of the present invention and vice versa.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Independent of the grammatical term usage, individuals with male, female or other gender identities are included within the term.

Further embodiments, features and advantages of the present invention will become apparent from the subsequent description and dependent claims, taken in conjunction with the accompanying drawings, in which:
- Figs. 1A and 1B: show exemplary blood vessels;
- Fig. 2: depicts an exemplary workflow for a method for training an artificial intelligence model;
- Fig. 3: depicts exemplary workflows that illustrate the interplay between a training of an artificial intelligence model and an application of the trained artificial intelligence model;
- Fig. 4: depicts an exemplary illustration of a U-net architecture;
- Fig. 5: depicts an exemplary method for ensembling an output of an artificial intelligence model;
- Fig. 6: depicts an exemplary flowchart for a method for segmenting angiography images and a subsequent highlighting of segmented features;
- Fig. 7: depicts a workflow for a method for training an artificial intelligence model;
- Fig. 8: depicts a workflow for a method for segmenting blood vessels;
- Fig. 9: depicts an illustration of an apparatus for training an artificial intelligence model;
- Fig. 10: depicts an illustration of an apparatus for segmenting blood vessels; and
- Fig. 11: depicts an illustration of a system for segmenting blood vessels.

In the Figures, like reference numerals designate like or functionally equivalent elements, unless otherwise indicated.

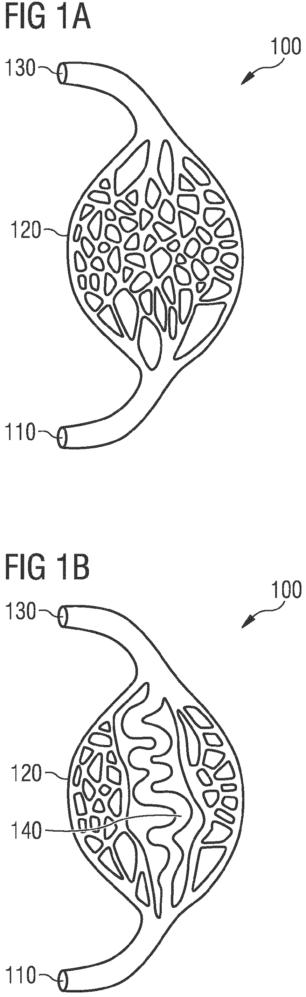

Figs. 1A and 1B depict exemplary blood vessels 100. Fig. 1A depicts the blood vessel 100 in a healthy state whereas Fig. 1B depicts the blood vessel 100 in an abnormal state, i.e., a state in which an arteriovenous malformation (AVM) is present.

Blood may enter the depicted blood vessel 100 by means of artery 110. The blood may pass several smaller blood vessels 120 and may finally leave the depicted blood vessel 100 by means of vein 130.

In case the blood vessel 100 may be seen as being in a healthy state (e.g., as depicted in Fig. 1A), the smaller blood vessel 120 may be largely parallel to each other and may not disadvantageously be interwoven.

However, in case the blood vessel 100 exhibits an AVM, e.g., in the area set by the smaller blood vessels 120, at least some of the smaller blood vessels 120 may be grown together such that they may form a bulk-like structure 140 (a nidus).

That is, an AVM may be referred to as a congenital vascular anomaly characterized by an abnormal tangle of blood vessels that may form direct connections between arteries and veins, bypassing the capillary system. This structural defect may disrupt normal blood flow and oxygen delivery to surrounding tissues, as the absence of capillaries causes high-velocity blood flow directly from arteries to veins. AVMs can occur anywhere in the body but are most commonly found in the brain or spinal cord.

The high-flow nature of AVMs can lead to complications such as tissue ischemia, pain, bleeding, or even rupture of weakened vessels, which may result in life-threatening hemorrhages or strokes. Diagnostic imaging techniques, including Doppler ultrasonography, MRI, and angiography, are used to identify AVMs by detecting abnormal blood flow patterns and vascular structures. Treatment options include surgical resection, embolization, or radiosurgery to eliminate or reduce the risk of complications.

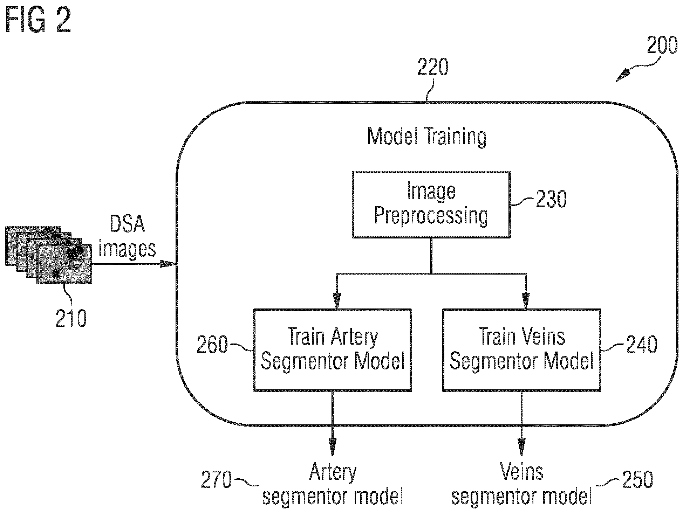

Fig. 2 depicts an exemplary workflow 200 of a method for training an artificial intelligence model for segmenting blood vessels in an angiography image.

The method may comprise providing a plurality of angiography images (e.g., DSA images) 210 to an artificial intelligence model 220 that is to be trained. The plurality of DSA images 210 may act as a training data set.

The plurality of DSA images 210 may be provided to an image preprocessing procedure 230. The image preprocessing procedure 230 may be configured as set out elsewhere herein.

The preprocessed images may further be used to train an artery segmentor model 260, in case the preprocessed images depict an arterial phase. The artery segmentor model may comprise a first artificial intelligence model as described above. The result of training the artery segmentor model 260 may be a trained artery segmentor model 270.

Alternatively, the preprocessed images may be used to train a veins segmentor model 240, in case the preprocessed images depict a venous phase. The veins segmentor model may comprise a second artificial intelligence model as described above. The result of training the artery segmentor model 260 may be a trained veins segmentor model 250.

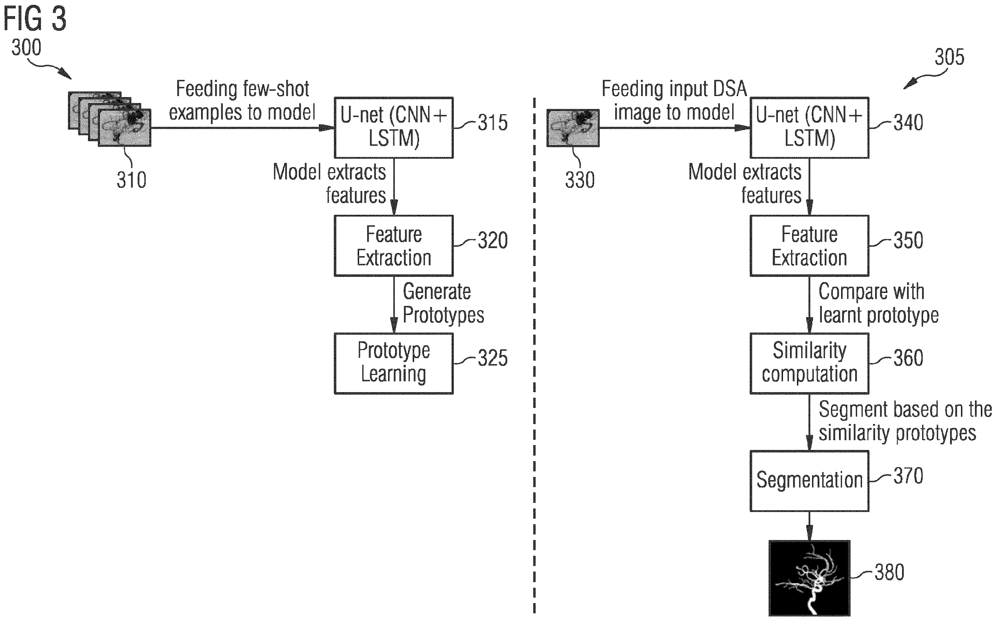

Fig. 3 shows two exemplary workflows 300 and 305 which illustrate the interplay between a training of an artificial intelligence model for segmenting blood vessels in an angiography image (flow chart 300) and an application of the trained artificial intelligence model for segmenting blood vessels in an angiography image (flow chart 305).

In some examples, the training 300 may start with providing a plurality of angiography images 310 (acting as a training data set which may at least partially be annotated, i.e., which may at least partially define which feature depicted therein may refer to arteries and/or veins, etc.) to a U-net architecture 315 which is to be trained. This may also be referred to as feeding few-shot examples to the U-net architecture that is to be trained. The U-net architecture may comprise a convolutional neural network (CNN) and a Long Short-Term Memory (LSTM).

In some examples, the plurality of angiography images 310, that is used for training the U-net architecture 315 (which may act as a respective first artificial intelligence model and a respective second artificial intelligence model (as outlined above)), may be provided as few-shot examples (annotated training data).

LSTM may improve temporal consistency in segmentation. For example, if a blood vessel is partially occluded or overlaps with another vessel in an angiography image, an RNN may leverage information from previous and subsequent angiography images to correctly segment the blood vessel. When vessels overlap in one angiography image but are distinct in others, the LSTM may track the temporal evolution of each of the blood vessels helping to disentangle them in the segmentation process. This may reduce the likelihood of errors that might occur if each angiography image was segmented independently.

The U-net architecture 315 may extract features depicted in the provided angiography images which may be indicative for arteries and veins in the respective angiography images as part of feature extraction 320.

Based on the extracted features, a prototype for an artificial intelligence model may be generated which may be capable of segmenting arteries and veins in an angiography image provided to the (trained) artificial intelligence model.

Subsequent to the generation of prototypes, a prototype learning 325 may be performed. In some examples, more than one prototype may be generated.

Prototype creation while training a U-Net architecture (model) with few shots may be referred to as generating representative feature embeddings from a small number of annotated examples. This may be used in few-shot learning to improve segmentation performance with limited data. After extracting features from the labeled few-shot samples, a prototype (class-wise feature representation) may be computed by averaging the embeddings of a few labeled samples for each class. This may ensure that each class may have a representative vector in the feature space, summarizing its key characteristics.

Based on the trained artificial intelligence model, a segmentation may be performed as depicted in workflow 305. Workflow 305 may also be referred to as inference.

The segmentation may be initiated by providing a plurality of angiography images (e.g., DSA images) 330. The angiography images 330 may differ from the angiography images 310 in that, that the angiography images 330 may not be annotated.

The angiography images 330 may be provided to a (trained) U-net architecture 340. The (trained) U-net architecture may comprise a convolutional neural network (CNN) and may comprise a Long Short-Term Memory (LSTM). The (trained) U-net architecture 340 may be configured to learn features comprised by the angiography images 330.

The (trained) U-net architecture 340 may be configured to extract features from the angiography image 330 (e.g., arteries, veins, etc.) as part of a feature extraction 350.

The extracted features may be compared to the prototype, which had been generated subsequently to the feature extraction 320.

Based on the comparison, a similarity computation 360 may be performed between the result of the feature extraction 320 and the feature extraction 360.

During inference, the obtained prototype may extract features from the angiography image 330 and may compare it to the at least one generated prototype using a similarity measure. In some examples, the similarity measure may be a cosine similarity. The class of the closest prototype may be assigned to the corresponding pixel/region of the angiography image 330. This may advantageously support a generalized segmentation with limited labeled samples.

Cosine similarity may be preferred for segmenting blood vessels in, e.g., DSA images because it is robust to intensity variations from contrast agent flow and imaging conditions, as it measures feature alignment rather than magnitude. Additionally, it may work well in normalized feature spaces, making it effective for capturing fine vessel structures.

Based on the result of the similarity computation 360, a segmentation 370 may be executed based on the similarity of the compared prototypes.

The result may be a segmented angiography image 380.

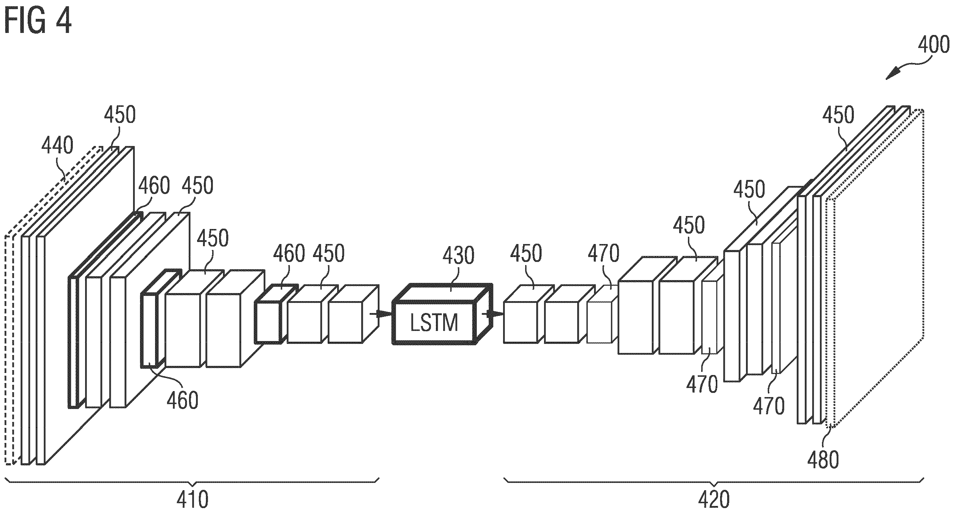

Fig. 4 shows an exemplary illustration of a U-net architecture 400.

The U-net architecture 400 comprises an encoder (contracting path) 410 which is followed by a decoder (expansive path) 420. An LSTM 430 is located in between the encoder 410 and the decoder 420.

The U-net architecture 400 may be a trained U-net architecture. Alternatively, the U-net architecture 400 may be a U-net architecture that is yet to be trained, i.e., U-net architecture 400 that has not been trained yet.

The encoder 410 may be configured to capture the context of an image by progressively reducing spatial dimensions while increasing feature complexity. It may employ repeated applications of convolutional layers (typically 3x3 filters), activation functions like ReLU, and max-pooling operations for downsampling. In some examples, at each step, the number of feature channels may be doubled to enhance the network's capacity to learn complex patterns.

The encoder 410 comprises a plurality of layers that are further described below.

The encoder 410 comprises an input layer 440. Input layer 440 may be configured to receive an angiography image (not shown in Fig. 4) that is subject to a segmentation.

In the shown example, the input layer 440 is followed by two first convolutional layers 450. In the context of the U-Net architecture 400, a convolutional layer is a component that serves as a feature extractor. It utilizes filters (small matrices of weights) that slide over an input image (e.g., the angiography image provided to the input layer 440) to identify local features such as edges, corners, and textures. Each filter generates a feature map that highlights specific patterns in the image.

The two first convolutional layers 450 are followed by a first max pooling layer 460. The first max pooling layer 460 provides a downsampling operation that reduces the spatial dimensions of feature maps while retaining the most prominent features. It is based on dividing the feature map into small regions (patches) and selecting the maximum value from each patch, effectively creating a downsampled representation of the data. This process enhances translation invariance, allowing the network to be less sensitive to small translations of the input image. In a U-Net architecture 400, max pooling layers may generally be used in the encoder (e.g., the encoder 410) to reduce spatial information while increasing the number of feature channels, which supports capturing more abstract features. The respective downsampling may be used for reducing computational complexity and focusing on higher-level features, making it a component for efficient image segmentation tasks.

In a generic example, a convolutional layer (e.g., the two first convolutional layers 450) may be followed by a rectified linear unit (ReLU) activation function and a max pooling operation (represented by a max pooling layer 460) to reduce spatial information while increasing feature information.

In the exemplarily depicted U-net architecture 400, the max pooling layer 460 is (exemplarily) followed by two second convolutional layers 450 which serve as additional feature extractors.

The two second convolutional layers 450 are followed by a second max pooling layer 460.

The second max pooling layer 460 may be followed by two third convolutional layers 450.

The two third convolutional layers 450 may be followed by a third max pooling layer 460.

The third max pooling layer 460 may be followed by two fourth convolutional layers 450.

The aforementioned layers may be comprised by the encoder 410.

The two fourth convolutional layers 450 may be followed by the LSTM 430. The LSTM 430 may be seen as a specialized type of RNN designed for processing and storing sequential data. Unlike standard RNNs, which rely on simple recurrent connections, the LSTM 430 incorporates gating mechanisms (input, forget, and output gates) that regulate the flow of information over time. These gates may allow LSTMs to maintain relevant information for extended sequences while discarding irrelevant data, effectively addressing the vanishing gradient problem that traditional RNNs struggle with.

As a recurrent network, the LSTM 430 processes sequences step by step, maintaining a hidden state that serves as a form of "memory". The recurrent nature of the LSTM 430 is evident in how the LSTM 430 utilizes previous cell states and hidden states across different time steps, forming a feedback loop that enables the retention of important contextual information over long sequences.

The LSTM 430 may be followed by the decoder 420.

The decoder 420 may be configured to restore spatial resolution through upsampling operations (e.g., transposed convolutions) and it may combine high-resolution features from the encoder (e.g., the encoder 410) using skip connections. These skip connections may transfer spatial information lost during downsampling back into the decoding process, enabling accurate reconstruction of segmentation masks.

The decoder 420 may comprise two first convolutional layers 450. Each of the convolutional layers of the decoder 420 may be configured to refine and enhance the feature maps that are upsampled from the bottleneck defined in between the encoder 410 and the decoder 420.

The two first convolutional layers 450 of the decoder 420 may be followed by a first deconvolution layer 470.

The first deconvolution layer 470 may be followed by two second convolutional layers 450.

The two second convolutional layers 450 are followed by a second deconvolution layer 470.

The second deconvolution layer 470 is followed by two third convolutional layers 450.

The two third convolutional layers 450 are followed by a third deconvolution layer 470.

The third deconvolution layer 470, in turn, is followed by two fourth convolutional layers 450.

The two fourth convolutional layers 450 are finally followed by an output layer 480. The output layer 480 may be configured to output the segmented angiography image initially provided to the U-net architecture 400.

That is, each step in the decoder 420 comprises an upsampling operation (represented by a respective deconvolution layer) followed by a pair of convolutional layers, which each halves the number of feature channels. This may be followed by concatenation with the high-resolution feature maps from the corresponding encoder 410, and then two additional convolutional layers (each preferably followed by a ReLU activation function) to further refine the feature maps.

In some examples, convolutional layers 450 may be used after upsampling to refine the feature maps by concatenating them with high-resolution features from the decoder 420. This process enhances the network's ability to capture both contextual and spatial information, making it highly effective for image segmentation tasks.

The decoder 420 may comprise the two first convolutional layers 450, the first deconvolution layer 470, the second convolutional layers 450, the second deconvolution layer 470, the third convolutional layers 450, the third deconvolution layer 470 and the two fourth convolutional layers 450.

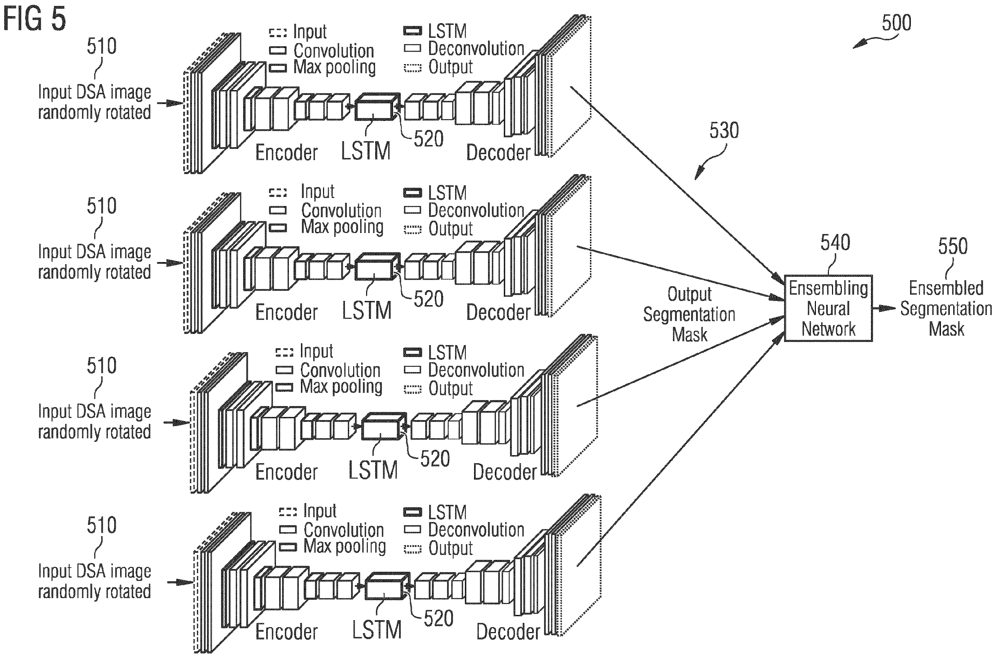

Fig. 5 depicts an exemplary method 500 for ensembling an output of an artificial intelligence model.

The exemplary method 500 for ensembling may be applicable during training of the artificial intelligence model and during an application of the trained artificial intelligence model.

Method 500 comprises rotating an input image 510 (e.g., an angiography image such as the angiography image 330) n-times, with n ≥ 1, about an axis perpendicular to the angiography image (in some examples, the rotation may be a three-dimensional rotation, e.g., if the angiography image is a 3D image). In some examples, the input image may be rotated n-times about a same angle (the input image may, e.g., be rotated twice by 30°). Alternatively, the input image may be rotated by a different angle during each rotation step (the input image may, e.g., be rotated by 30° first and may subsequently be rotated by 15°).

Each of the rotated images 510 is then passed to a (same) U-net architecture 520. In some examples, the same U-net architecture 520 (e.g., with LSTM) may be implemented n-times in parallel such that the rotated images may be processed in parallel by the respective U-net architectures 520.

The U-net architecture 520 may be a U-net architecture 520 that is configured to segment arteries. Alternatively, the U-net architecture 520 may be a U-net architecture 520 that is configured to segment veins.

The U-net architecture 520 may be configured identical to the U-net architecture 400 as described with reference to Fig. 4, above.

For each of the rotated images 510 provided to the U-net architecture 520, the U-net architecture 520 may generate a respective output 530.

Each of the respective outputs 530 may be provided to an ensembling neural network 540. The ensembling neural network 540 may be configured to ensemble, i.e., to combine the respective outputs 530 a single output.

The single output may be an ensembled segmentation mask 550.

In some examples, the rotated images 510 may be passed to both a respective U-net architecture that is configured to segment arteries and to a respective U-net architecture that is configured to segment veins.

In some examples, the outputs 530 obtained from the U-net architecture 520, which is configured to segment arteries, may be combined to an ensembled segmentation mask 550. Additionally, the outputs 530 obtained from the U-net architecture 520 that is configured to segment veins may be combined to an ensembled segmentation mask 550. The respective ensembled segmentation masks 540 associated with the segmentation of arteries and the respective ensembled segmentation mask 550 associated with the segmentation of veins may be combined to a single superimposed segmentation mask 550.

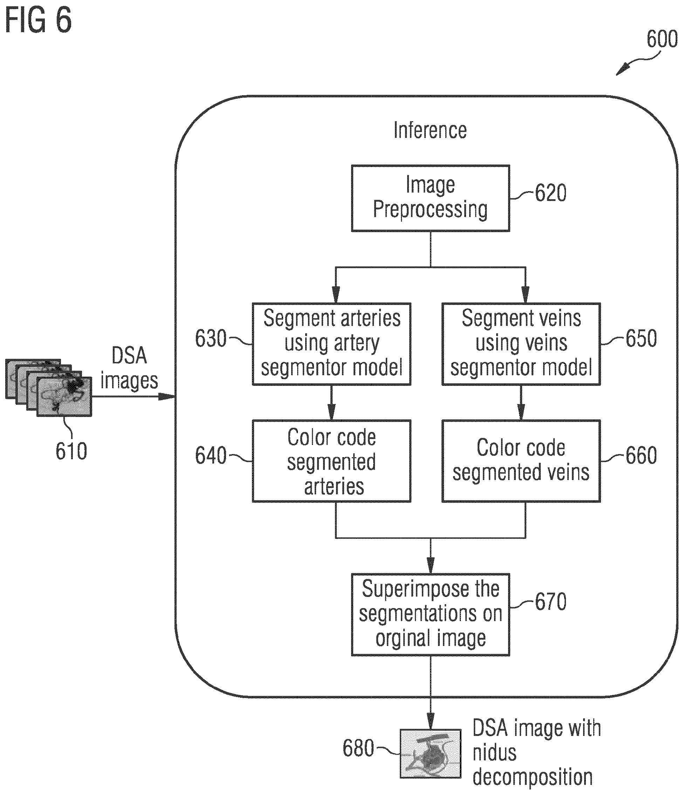

Fig. 6 depicts an exemplary workflow 600 for a method for segmenting angiography images and for subsequently highlighting the segmented features in the respective angiography images.

The method comprises providing a plurality of angiography images (e.g., DSA images as described above) 610 to a trained artificial intelligence model.

Initially, an image preprocessing procedure 620 may be applied to the respective plurality of angiography images. The preprocessing procedure 620 may be configured as described above.

The preprocessing procedure 620 may comprise a CLAHE procedure. The CLAHE procedure may redistribute intensity values of pixels to span an entire range of possible pixel values. In an example, if the original image has intensity values concentrated between 100 and 150, the histogram equalization may stretch these values to cover a full possible range of pixel values spread in between the interval of 0 and 255. This may at least locally enhance the contrast in the respective angiography image. To avoid over-amplification of noise and excessive contrast, CLAHE may limit the contrast enhancements by clipping the histogram at a predefined value (e.g., a clip limit) before applying histogram equalization. After processing all of the regions, the borders between them are eliminated by interpolating the pixel values. This may ensure a smooth transition between adjacent regions and may prevent artifacts.

CLAHE may at least partially increase the contrast in the angiography image. Contrast in images may refer to the difference in luminance or color that makes objects or elements distinguishable from one another and their background. In the context of image processing and enhancement, contrast may be a critical factor that may affect the visual perception and overall quality of an image. It may be defined as the ratio of the brightest to the darkest parts of an image, or more specifically, as the difference in pixel values between adjacent areas. Contrast may thus play a crucial role in determining the clarity, depth, and detail visibility within an image, and can be manipulated through various techniques to improve image quality or emphasize specific features.

CLAHE may at least partially decrease the noise level in the preprocessed angiography images. Noise may be referred to as the degree of random variation or distortion in pixel intensity values, which can obscure details and degrade image quality. This noise may be caused by electronic interference, sensor limitations, or environmental factors during image capture. In technical terms, it may often be quantified as the signal-to-noise ratio (SNR), representing the proportion of meaningful image data (signal) to unwanted variations (noise). A higher noise level may correspond to a lower SNR, resulting in a more visually distorted image.

The preprocessed image may subsequently be provided to a segment arteries procedure 630 in case the preprocessed image depicts blood vessels in the arterial phase.

Subsequently to the segment arteries procedure 630, a color-coding procedure 640 of the segmented arteries is performed. The color-coding procedure 640 may be implemented as described above.

The preprocessed image may subsequently be provided to a segment veins procedure 650 in case the preprocessed image depicts blood vessels in the venous phase.

Subsequently to the segment veins procedure 650, a color-coding procedure 660 of the segmented veins is performed. The color-coding procedure 660 may be implemented as described above.

Subsequently, the individual color-coding procedures 640 and 660 may be combined and superimposed onto the original angiography image 610, as part of a superimposing procedure 670, to highlight the respectively segmented arteries and veins in the original angiography image 610.

Based thereon, angiography images may be provided with a respective nidus decomposition 680.

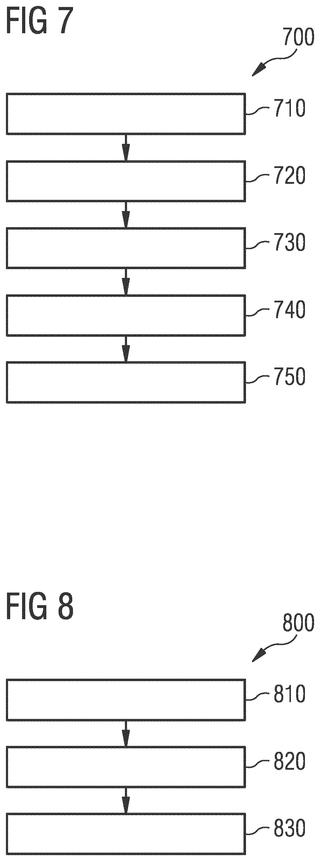

Fig. 7 depicts a workflow for a method 700 for training an artificial intelligence model for segmenting blood vessels in an angiography image.

In step 710, a training data set is preprocessed, the training data set comprises angiography images depicting an arterial phase or a venous phase of the blood vessels, to decrease a noise level and/or to enhance a contrast in the angiography images.

In step 720, the angiography images depicting an arterial phase are provided to a first artificial intelligence model.

In step 730, the angiography images depicting a venous phase are provided to a second artificial intelligence model.

In step 740, the first artificial intelligence model is trained for segmenting arteries in the angiography images.

In step 750, the second artificial intelligence model is trained for segmenting veins in the angiography images.

Fig. 8 depicts a workflow for a method 800 for segmenting blood vessels in an angiography image.

In step 810, a processing of the angiography image depicting an arterial phase or a venous phase of the blood vessels is performed to decrease a noise level and/or to enhance a contrast in the angiography image.

In step 820, the angiography image is provided to a trained artificial intelligence model that is trained according to the computer-implemented method (e.g., the method 700) as set out herein.

In step 830, arteries and/or veins in the angiography image are segmented based on the trained artificial intelligence model.

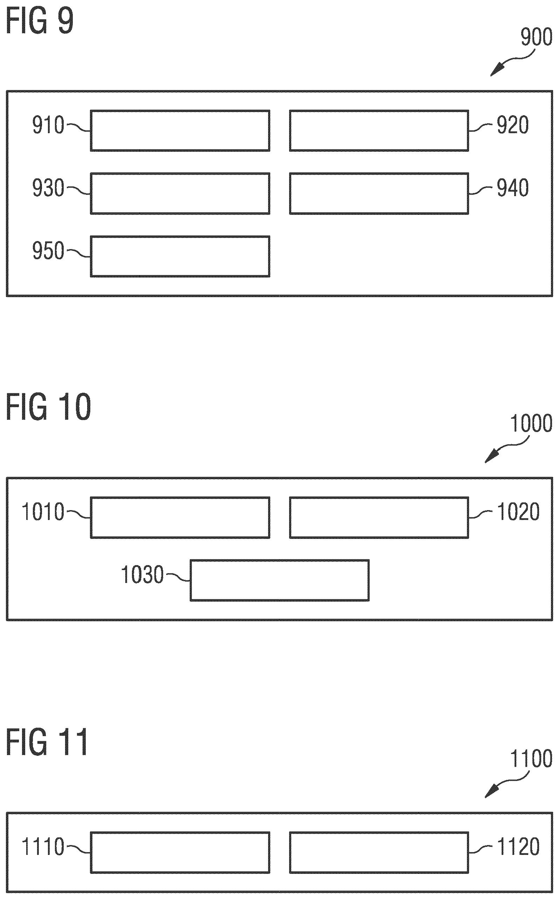

Fig. 9 shows an illustration of an apparatus 900 for training an artificial intelligence model for segmenting blood vessels in an angiography image. The apparatus 900 comprises a preprocessing unit 910, a providing unit 920, a providing unit 930, a training unit 940 and a training unit 950.

The preprocessing unit 910 is configured to preprocess a training data set, the training data set comprising angiography images depicting an arterial phase or a venous phase of the blood vessels, to decrease a noise level and/or to enhance a contrast in the angiography images.

The providing unit 920 is configured to provide the angiography images depicting an arterial phase to a first artificial intelligence model.

The providing unit 930 is configured to provide the angiography images depicting a venous phase to a second artificial intelligence model.

The training unit 940 is configured to train the first artificial intelligence model for segmenting arteries in the angiography images.

The training unit 950 is configured to train the second artificial intelligence model for segmenting veins in the angiography images.

Fig. 10 shows an illustration of an apparatus 1000 for segmenting blood vessels in an angiography image. The apparatus 1000 comprises a preprocessing unit 1010, a providing unit 1020 and a segmenting unit 1030.

The preprocessing unit 1010 is configured for preprocessing the angiography image depicting an arterial phase or a venous phase of the blood vessels, to decrease a noise level and/or to enhance a contrast in the angiography image.

The providing unit 1020 is configured for providing the angiography image to a trained artificial intelligence model that is trained according to the computer-implemented method (e.g., the method 700) as set out herein.

The segmenting unit 1030 is configured for segmenting arteries and/or veins in the angiography image based on the trained artificial intelligence model.

Fig. 11 shows an illustration of an exemplary system 1100 for segmenting blood vessels in an angiography image. The system may comprise means for executing 1110 and means for executing 1120.

The means for executing 1110 are configured to execute the computer-implemented method as disclosed herein.

The means for executing 1120 are configured to execute the computer program product as disclosed herein.

Although the present invention has been described in accordance with preferred embodiments, it is obvious for the person skilled in the art that modifications are possible in all embodiments.

### REFERENCE NUMERALS

- 100: blood vessels
- 110: artery
- 120: smaller blood vessels
- 130: veins
- 140: bulk-like structure (nidus)
- 200: exemplary workflow
- 210: angiography images (DSA images)
- 220: artificial intelligence model
- 230: image preprocessing procedure
- 240: training of veins segmentor model
- 250: veins segmentor model
- 260: training of artery segmentor model
- 270: artery segmentor model
- 300: workflow for training an artificial intelligence model
- 305: workflow for using the trained artificial intelligence model
- 310: angiography images
- 315: U-net architecture
- 320: feature extraction
- 325: prototype learning
- 330: angiography images
- 340: U-net architecture
- 350: feature extraction
- 360: similarity computation
- 370: segmentation
- 380: segmented angiography image
- 400: U-net architecture
- 410: encoder
- 420: decoder
- 430: LSTM
- 440: input layer
- 450: convolutional layers
- 460: max pooling layers
- 470: deconvolution layers
- 480: output layer
- 500: method for rotating angiography images
- 510: input images
- 520: U-net architecture
- 530: outputs
- 540: ensembling neural network
- 550: ensembled segmentation mask
- 600: workflow for a method for segmenting angiography images
- 610: angiography images
- 620: preprocessing procedure
- 630: segment arteries procedure
- 640: color-coding procedure
- 650: segment veins procedure
- 660: color-coding procedure
- 670: superimposing procedure
- 680: angiography image with nidus decomposition
- 700: workflow for a method for training an artificial intelligence model
- 710: step
- 720: step
- 730: step
- 740: step
- 750: step
- 800: workflow for a method for segmenting blood vessels
- 810: step
- 820: step
- 830: step
- 900: illustration of apparatus for training an artificial intelligence model
- 910: preprocessing unit
- 920: providing unit
- 930: providing unit
- 940: training unit
- 950: training unit
- 960: combining unit
- 1000: illustration of apparatus for segmenting blood vessels
- 1010: preprocessing unit
- 1020: providing unit
- 1030: segmenting unit
- 1100: system for segmenting blood vessels
- 1110: means for executing
- 1120: means for executing

## Claims

1. Computer-implemented method (700) for training an artificial intelligence model for segmenting blood vessels (100) in an angiography image (210; 330; 510; 610), comprising:
preprocessing (710) a training data set, the training data set comprising angiography images (310) depicting an arterial phase and/or a venous phase of the blood vessels, to decrease a noise level and/or to enhance a contrast in the angiography images (310);
providing (720) the angiography images (310) depicting an arterial phase to a first artificial intelligence model;
providing (730) the angiography images (310) depicting a venous phase to a second artificial intelligence model;
training (740) the first artificial intelligence model for segmenting arteries in the angiography images (310); and
training (750) the second artificial intelligence model for segmenting veins in the angiography images (310).

2. The computer-implemented method of claim 1,
wherein the training (260) of the first artificial intelligence model and the training (240) of the second artificial intelligence model comprises a few shot learning, FSL, procedure.

3. The computer-implemented method of any of the preceding claims,
wherein the first artificial intelligence model comprises a first convolutional neural network in a first U-net architecture (315; 400); and
wherein the second artificial intelligence model comprises a second convolutional neural network in a second U-net architecture (315; 400).

4. The computer-implemented method of claim 3,
wherein the first U-net architecture (315; 400) of the first artificial intelligence model comprises a first long short-term memory, LSTM (430); and/or
wherein the second U-net architecture (315; 400) of the second artificial intelligence model comprises a second LSTM (430).

5. The computer-implemented method of any of the preceding claims, further comprising:
rotating at least one of the angiography images (310) at least n times, with n ≥ 1, about at least one respective angle prior to providing the at least one rotated angiography image to the first artificial intelligence model or to the second artificial intelligence model, respectively;
ensembling an output (530) of the first artificial intelligence model to obtain at least a first ensembled output; and/or
ensembling an output (530) of the second artificial intelligence model to obtain at least a second ensembled output; and
superimposing the at least one first ensembled output (540) and/or the at least one second ensembled output (540) to obtain a single segmentation output.

6. The computer-implemented method of any of the preceding claims,
wherein the angiography images (310) are captured at different points in time, preferably such that they depict a temporal progression of a contrast agent through the blood vessels (100) depicted in the angiography images (310).

7. A trained artificial intelligence model for segmenting blood vessels (100) in an angiography image, wherein the trained artificial intelligence model is trained according to the computer-implemented method of one of the claims 1 - 6.

8. A computer-implemented method (800) for segmenting blood vessels in an angiography image (210; 330; 510; 610), comprising:
preprocessing (810) the angiography image (210; 330; 510; 610) depicting an arterial phase and/or a venous phase of the blood vessels (100), to decrease a noise level and/or to enhance a contrast in the angiography image (210; 330; 510; 610);
providing (820) the angiography image (210; 330; 510; 610) to a trained artificial intelligence model that is trained according to the computer-implemented method of one of the claims 1 - 6; and
segmenting (830) arteries and/or veins in the angiography image (210; 330; 510; 610) based on the trained artificial intelligence model.

9. The computer-implemented method of claim 8, further comprising:
outputting the angiography image (680) with the segmented arteries and/or veins on an output device; and
preferably highlighting (640; 660) the segmented arteries and/or veins in the angiography image, more preferably by color coding the segmented arteries and/or veins.

10. The computer-implemented method of one of the claims 8 or 9, further comprising:
determining, based on the segmented arteries and/or veins, that an arteriovenous malformation is present in the angiography image, preferably in a nidus region (140).

11. The computer-implemented method of claim of any of the preceding claims,
wherein the preprocessing (710; 810) comprises executing a contrast limited advanced histogram equalization, CLAHE.

12. The computer-implemented method of any of the preceding claims, wherein the angiography image (210; 330; 510; 610) is a digital subtraction angiography, DSA, image.

13. The computer-implemented method of any of the preceding claims, further comprising:
retrieving the angiography image (210; 330; 510; 610) from a remote entity, preferably a database.

14. A computer program product comprising instructions which, when the program is executed by a computer, cause the computer to carry out the computer-implemented method of one of claims 1 - 13.

15. A computer-implemented apparatus (1000) for segmenting blood vessels in an angiography image (210; 330; 510; 610), comprising:
a preprocessing unit (1010) for preprocessing the angiography image (210; 330; 510; 610) depicting an arterial phase or a venous phase of the blood vessels (100), to decrease a noise level and/or to enhance a contrast in the angiography image (210; 330; 510; 610);
a providing unit (1020) for providing the angiography image (210; 330; 510; 610) to a trained artificial intelligence model that has been trained according to the computer-implemented method of one of the claims 1 - 6; and
a segmenting unit (1030) for segmenting arteries and/or veins in the angiography image (210; 330; 510; 610) based on the trained artificial intelligence model.
